# FASCICULE DE BREVET EUROPEEN

(11) **EP 2 880 378 B1**
(45) Date de publication et mention de la délivrance du brevet: **17.04.2019**
(21) Numéro de dépôt: 13741760.6
(22) Date de dépôt: 25.07.2013
(51) Int. Cl.: F25B 21/00, F28F 3/04

(54) **PIÈCE MONOBLOC COMPRENANT UN MATÉRIAU MAGNÉTOCALORIQUE NE COMPRENANT PAS UN ALLIAGE COMPRENANT DU FER ET DU SILICIUM ET UN LANTHANIDE, ET GÉNÉRATEUR THERMIQUE COMPRENANT LADITE PIÈCE**
EINTEILIGES ELEMENT MIT EINEM MAGNETOKALORISCHEN MATERIAL MIT EINER LEGIERUNG MIT EISEN UND SILICIUM UND EINEM LANTHANID SOWIE WÄRMEGENERATOR MIT DIESEM ELEMENT
ONE-PIECE PART INCLUDING A MAGNETOCALORIC MATERIAL NOT INCLUDING AN ALLOY INCLUDING IRON AND SILICON AND A LANTHANIDE, AND HEAT GENERATOR INCLUDING SAID PART

(30) Priorité: 01.08.2012 FR 1257496
(43) Date de publication de la demande: 10.06.2015
(73) Titulaire: Cooltech Applications, 67810 Holtzheim (FR)
(72) Inventeur: MULLER, Christian, F-67000 Strasbourg (FR)
(74) Mandataire: Esselin, Sophie
(86) Numéro de dépôt international: PCT/EP2013/065749
(87) Numéro de publication internationale: WO 2014/019941

(56) Documents cités:
- EP-A1- 0 552 538
- WO-A1-2008/099234
- WO-A1-2009/024412
- WO-A1-2009/090442
- WO-A1-2012/056585

## Description

Le domaine de l'invention est celui des dispositifs thermiques et plus précisément des générateurs de froid magnétique.

De manière générale, la production de froid répond à un besoin en constante évolution et représente aujourd'hui une part importante de la consommation d'électricité mondiale utilisée notamment pour l'air conditionné et la conservation des aliments et ce alors que l'efficacité des techniques de réfrigération conventionnelles basées sur la compression et la détente d'un gaz demeurent insuffisantes.

Les premiers fluides frigorigènes tels que l'ammoniac, le dioxyde de soufre, le dioxyde de carbone ou le chlorure de méthyle étaient très nocifs pour l'homme et l'environnement. Ils furent remplacés par les chlorofluorocarbures, eux même interdits dans les années 2000 du fait de leur contribution à l'effet de serre et à l'endommagement de la couche d'ozone. Ce problème demeure puisque les hydrochlorofluorocarbures utilisés actuellement continuent, dans de moindres proportions, à avoir les mêmes effets néfastes que les précédents.

Dans ce contexte, il y a donc un double avantage, énergétique et environnemental, à développer de nouvelles techniques de production du froid permettant d'une part, d'éliminer les gaz frigorigènes et d'autre part, d'améliorer le rendement énergétique. On peut notamment citer comme techniques alternatives : la réfrigération thermoacoustique, la réfrigération thermoélectrique ou encore la réfrigération magnétique.

Cette dernière repose sur l'effet magnétocalorique (EMC) de certains matériaux, qui consiste en une variation de leur température lorsqu'ils sont soumis à un champ magnétique. Il suffit ainsi de soumettre ces matériaux à une succession de cycles d'aimantation et de désaimantation et de réaliser un échange thermique avec un fluide caloporteur pour parvenir à une variation de température la plus élargie possible. L'efficacité d'un tel cycle de réfrigération magnétique surpasse d'environ 30 % celle d'un cycle de réfrigération classique.

Cette économie énergétique réalisable avec la réfrigération magnétique la rend particulièrement intéressante pour des applications de climatisation ou de réfrigération domestique ou industrielle.

L'effet magnétocalorique (EMC) est maximum lorsque la température du matériau est proche de sa température de Curie, la température de Curie (Tc) étant la température, à laquelle le matériau perd son aimantation spontanée. Au-dessus de cette température, le matériau est dans un état désordonné dit paramagnétique

Certains matériaux magnétiques tels le gadolinium, l'arsenic ou certains alliages de type MnFe présentent des propriétés magnétocaloriques particulièrement bien adaptées aux applications précitées.

Parmi les alliages, et notamment à base de Si, il est connu selon les températures de Curie recherchées de pouvoir utiliser des alliages à base de LaFeSiCo ou à base de LaFeSi(H). L'insertion d'atomes légers tels que l'hydrogène ou le cobalt dans les composés LaFeSi, peut être un moyen efficace d'augmenter la température de Curie tout en maintenant l'effet EMC du matériau élevé. De tels matériaux sont particulièrement intéressants en raison de leurs propriétés magnétocaloriques conjuguées à des coûts de fabrication, permettant des applications de masse plus favorables que ceux de matériaux tels que le gadolinium.

De manière générale, pour exploiter les propriétés de tels matériaux magnétocaloriques, la technologie du froid magnétique repose sur l'interaction de ces matériaux avec un liquide caloporteur pouvant être à base d'eau.

Le matériau s'échauffe de manière quasi-instantanée quand il est placé dans un champ magnétique et il se refroidit suivant une même dynamique thermique quand il est retiré du champ magnétique.

Pendant ces phases magnétiques, le matériau est parcouru par le liquide appelé caloporteur qui va, soit se réchauffer au contact du matériau lors d'une phase dite de magnétisation, soit se refroidir au contact du matériau lors d'une phase dite de démagnétisation.

De manière classique, le liquide caloporteur circule dans des canaux rectilignes ou des pores débouchant existants dans le matériau magnétocalorique, cette circulation correspondant à un flux hydraulique du fluide en mode laminaire, de manière à obtenir une surface d'échange maximale, avec une perte de charge hydraulique minimale.

Ainsi, un cycle comprend :
- une phase de magnétisation (état magnétique = 1) ;
- une phase de démagnétisation (état magnétique = 0)
qui se traduit par une énergie disponible à chaque phase.

Ce cycle est répété jusqu'à des fréquences de plusieurs Hertz. Quand la fréquence augmente, la puissance thermique (par exemple : le refroidissement) délivrée par l'appareil augmente également.

Pour que cette puissance augmente en proportion de l'augmentation de la fréquence, il est nécessaire d'avoir des caractéristiques d'échanges thermiques entre le matériau et le liquide qui permettent d'accroitre ce flux thermique.

La géométrie d'une pièce en matériau magnétocalorique est donc essentielle pour assurer un échange thermique optimal entre ladite pièce et le fluide caloporteur qui circule en contact avec celle-ci.

Il est connu d'utiliser des structures lamellaires de matériau magnétocalorique, permettant la circulation de fluide entre lesdites lames et ainsi d'augmenter les surfaces d'échange avec le fluide caloporteur.

Il est alors nécessaire de calibrer de manière reproductible, constante et très précise les distances entre lesdites lames de matériau de manière à contrôler au mieux les processus d'échange thermique. Ceci nécessite l'utilisation d'éléments de positionnement des lames entre elles tout en assurant la maîtrise des paramètres géométriques nécessaire à l'obtention de caractéristiques d'échange thermiques satisfaisantes.

Des pièces en matériau magnétocalorique comportant une embase et des lames solidaires de ladite embase sont connues des documents WO 2012/056585 A1, WO 2009/090442 A1 et WO 2009/024412 A1.

Dans ce contexte, la présente invention propose une structure optimisée de pièce en matériau magnétocalorique et un procédé permettant de réaliser une telle pièce, alors que les techniques classiques actuellement déployées ne permettent pas d'atteindre les rapports de forme nécessaires à l'optimisation des échanges de chaleur, en raison de dimensions trop faibles à atteindre dans des pièces massiques.

Plus précisément l'invention a pour objet l'invention a pour objet une pièce monobloc, à savoir d'un seul tenant, à base d'au moins un matériau magnétocalorique ne comprenant pas un alliage comprenant du fer et du silicium et un lanthanide caractérisée en ce que :
- ladite pièce comporte une embase située dans un premier plan défini par une première direction Dx et par une seconde direction Dy perpendiculaire à la première direction Dx et un ensemble de N lames unitaires L_{a,i} solidaires de ladite embase ;
- lesdites lames présentant une première dimension D_{Lai,x} selon la première direction, une seconde dimension D_{Lai,y} selon la seconde direction et une troisième dimension D_{Lai,z} selon une troisième direction Dz perpendiculaire aux première et seconde dimensions ;
- une ième lame étant sensiblement parallèle à et séparée d'une (i+1)ème lame par une ième distance dᵢ ;
- le rapport entre la seconde dimension D_{Lai},_{y} et la première dimension D_{Lai,x} étant supérieur ou égal à 10 ;
- le rapport entre la troisième dimension D_{Lai,z} et la première dimension D_{Lai,x} étant supérieur ou égal à 6 ;
- la première dimension D_{Lai,x} étant du même ordre de grandeur que ladite distance dᵢ séparant une ième lame, d'une (i+1)ème lame.

Des dimensions particulièrement bien adaptées peuvent être situées dans les gammes suivantes :
0,1 mm ≤ D _{Lai,x} ≤ 0,8 mm ;
10 mm ≤ D _{Lai,y} ≤ 100mm ;
5 mm ≤ D _{Lai,z} ≤ 25mm et pouvant être de préférence de l'ordre de 12 mm.

Selon une variante de l'invention, la distance entre une ième lame et une (i+1) ème lame est comprise entre environ 0,1 mm et 1 mm.

Avantageusement, la présente invention a aussi pour objet une pièce complexe comprenant deux pièces monobloc selon l'invention, lesdites deux pièces étant encastrées tête-bêche, permettant de réduire l'espace libre entre lames.

Selon une variante de l'invention, les lames comportent des surfaces supérieures convexes.

Selon une variante de l'invention, ladite embase comporte des surfaces creusées entre une ième lame et une (i+1)ème lame.

Avantageusement le profil des creux peut être de type concave, les creux ayant un rayon de courbure optimisé de manière à renforcer la vitesse d'un fluide caloporteur destiné à circuler entre les lames. Typiquement le rayon de courbure peut être de l'ordre de 0,1 mm.

Typiquement le nombre de lames de la pièce monobloc peut être compris entre une dizaine et une trentaine de lames.

Il est à noter qu'il peut être intéressant de fabriquer des dispositifs de génération thermique comprenant des éléments magnétocaloriques fonctionnant à différentes températures de Curie et donc des pièces constituées de matériaux magnétocaloriques différents, ces pièces devant être facilement reconnaissables grâce à la présence d'éléments de marquage.

C'est pourquoi, selon une variante de l'invention, l'ensemble des lames comporte au moins une lame de troisième dimension différente de celle des autres lames permettant de constituer un marquage de ladite pièce monobloc. Le positionnement de la lame L_{a,i} considérée dans l'ensemble des lames L_{a,1}, ..., L_{a,N} étant relatif à une température de Curie donnée.

De même un signe distinctif peut également être intégré au niveau de l'embase, plus précisément dans ce cas, ladite embase comporte au moins une surface entre une ième lame et une (i+1) ème lame, creusée différemment des autres surfaces creusées, permettant de constituer un marquage de ladite pièce monobloc.

Avantageusement, dans une configuration à deux blocs emboîtés tête-bêche, une lame de troisième dimension supérieure à celle des autres lames du bloc viendra s'emboîter dans un creusement d'embase de dimensions conformes, ce qui rendra possible un positionnement relatif des deux blocs garantissant des épaisseurs de lames de fluides régulières et conformes aux spécifications. Ces dimensions remarquables peuvent donc remplir une fonction de marquage et de positionnement, ou seulement une de ces fonctions.

De manière à optimiser les configurations d'écoulement de fluide au travers de la pièce monobloc, le rapport entre la dimension selon la troisième direction de l'embase D_{E,z} et la dimension selon la deuxième direction de l'embase D_{E,y} est compris entre environ 1/5 et 1/30 ;
- le rapport entre la dimension selon la troisième direction de l'embase D_{E,z} et la troisième dimension D_{Lai,z} est de l'ordre 1/20 ;
- la première dimension D_{Lai,x} étant préférentiellement sensiblement égale à la dimension selon la troisième direction de l'embase D_{E,z}.

Selon une variante de l'invention, l'embase étant constituée d'un matériau d'embase, les lames sont constituées d'au moins un matériau magnétocalorique, le matériau d'embase et le matériau magnétocalorique étant différents. Typiquement, l'embase peut être réalisée dans un matériau non magnétocalorique de coût moins élevé que celui d'un matériau magnétocalorique.

Selon une variante de l'invention, la pièce monobloc comprend au moins deux séries de lames constituées d'au moins deux matériaux magnétocaloriques différents. Ainsi en mixant par exemples différents matériaux magnétocaloriques et donc les températures de Curie, on peut adapter finement une pièce et ses caractéristiques thermiques à un cahier des charges précis.

Selon une variante de l'invention, la pièce monobloc comprend au moins un matériau magnétocalorique choisi parmi : le Gadolinium, un alliage de la famille MnFe, un alliage de MnFeSn et un alliage de la famille du GdTb.

Selon une variante de l'invention, le matériau magnétocalorique est un matériau composite comprenant au moins une poudre d'un premier matériau magnétocalorique et un liant organique.

L'invention a aussi pour objet un module thermique contenant au moins un élément magnétocalorique comprenant des ouvertures destinées à être traversées par un fluide caloporteur, caractérisé en ce que ledit élément magnétocalorique comporte au moins une pièce monobloc ou une pièce complexe selon l'invention.

Selon une variante de l'invention, le module comporte un arrangement annulaire équipé de logements, lesdits logements étant comblés de pièces monobloc.

Selon une variante de l'invention, l'arrangement comporte des canaux pour le passage d'un fluide.

Selon une variante de l'invention, le module thermique comporte une structure de disque plat présentant des branches distribuées de manière radiale, lesdites branches comprenant lesdits logements et des extrémités en forme de V. Pour une telle configuration et avantageusement, la pièce monobloc présente une géométrie en forme de V, l'ensemble des lames sur leur embase étant au moins partiellement replié selon la seconde direction Dy.

Selon une variante de l'invention, les branches sont arrangées sous forme de V et les extrémités des V comportent les entrées/sorties.

L'invention a également pour objet un générateur thermique comprenant au moins un module thermique de l'invention, traversé par un fluide caloporteur entraîné en déplacement alterné de part et d'autre dudit élément magnétocalorique, ledit générateur comprenant un arrangement magnétique mis en mouvement pour soumettre alternativement ledit élément magnétocalorique à une variation de champ magnétique et créer alternativement dans ledit élément magnétocalorique, un cycle d'échauffement et de refroidissement.

Afin de réaliser dans toutes ces variantes possibles, une pièce monobloc selon la présente invention, le Demandeur a considéré qu'un procédé d'extrusion ou de co-extrusion était particulièrement bien adapté à l'ensemble des contraintes imposées en terme de dimensionnement pour obtenir d'excellentes performances thermiques et ce en corrélation avec des contraintes de développement industriel de masse.

C'est pourquoi, la présente invention peut être mise en oeuvre par un procédé de fabrication de pièce monobloc comprenant les étapes suivantes :
- l'introduction en continu dans au moins un corps d'extrudeuse (Ex) comprenant au moins un fourreau chauffant (Fi), d'au moins une poudre de matériau magnétocalorique ou un mélange d'au moins une poudre magnétocalorique avec un liant organique ;
- le mélange, l'homogénéisation et la fusion de ladite poudre de matériau magnétocalorique et, le cas échéant, du liant par au moins une vis d'extrusion (Vi) située dans le ou les corps d'extrudeuse ;
- la mise en forme dudit mélange comprenant ledit matériau magnétocalorique à travers au moins une filière d'extrusion (fil), équipée d'au moins d'une empreinte, permettant de former une pièce monobloc selon l'invention;
- ladite au moins une filière définissant la structure de ladite pièce monobloc.

Selon une variante, le procédé permettant de mettre en oeuvre l'invention comprend en outre une étape de refroidissement progressif dans l'espace, en sortie de ladite au moins une filière, grâce à des moyens dédiés.

Selon une variante, les moyens dédiés comprennent une filière comprenant au moins un tronçon équipé d'au moins un canal dans lequel peut circuler un fluide de refroidissement/tempérage.

Selon une variante, la filière comporte plusieurs tronçons comportant chacun une empreinte, au moins deux tronçons étant séparés par une plaque d'isolation thermique dont l'épaisseur est déterminée pour permettre une différence de température entre les deux tronçons.

Selon une variante, le ou les corps d'extrudeuse comprennent chacun deux vis co-rotatives.

Selon une variante, le procédé permettant de mettre en oeuvre l'invention comprend :
- la fabrication en continu d'un ensemble constitué de bandes de matériau magnétocalorique, solidaires d'une embase ;
- une opération de découpe dudit ensemble de manière à définir des pièces élémentaires monobloc.

Selon une variante, le procédé permettant de mettre en oeuvre l'invention comprend l'introduction de différents matériaux au travers de différents moyens d'alimentation répartis le long du ou des corps d'extrudeuse.

Selon une variante, le procédé permettant de mettre en oeuvre l'invention comprend l'introduction au travers d'un moyen d'alimentation, d'un liant organique de manière à fabriquer un matériau composite comprenant au moins une poudre de matériau magnétocalorique.

Selon une variante, ladite pièce monobloc étant constituée spatialement de différents matériaux selon la seconde direction Dy, le procédé permettant de mettre en oeuvre l'invention comprend l'introduction de manière séquencée des différents matériaux magnétocaloriques de manière à fabriquer un ensemble de bandes continues présentant des séquences de matériaux magnétocaloriques différents, solidaire d'une embase, et la découpe de pièces monobloc unitaires dans ledit ensemble de bandes.

L'invention sera mieux comprise et d'autres avantages apparaîtront à la lecture de la description qui va suivre donnée à titre non limitatif et grâce aux figures annexées parmi lesquelles :
- la figure 1 illustre un premier exemple d'une première variante de pièce monobloc selon l'invention comprenant une structure en forme de peigne ;
- la figure 2 illustre un second exemple de la première variante de pièce monobloc selon l'invention ;
- la figure 3 illustre un troisième exemple de la première variante de pièce monobloc selon l'invention ;
- la figure 4 illustre un cinquième exemple de la première variante de pièce monobloc selon l'invention ;
- la figure 5 illustre un exemple d'assemblage de deux pièces monobloc de l'invention ;
- les figures 6a, 6b et 6c illustrent une pièce monobloc comprenant des lames structurées pour maintenir un espace déterminé entre lesdites lames grâce à la présence de protubérances, ainsi qu'un assemblage comprenant de telles pièces ;
- les figures 7a, 7b et 7c illustrent une pièce monobloc comprenant des lames structurées pour maintenir un espace déterminé entre lesdites lames grâce à la présence de protubérances et une embase structurée pour permettre un ajustement de pièces monobloc intégrées dans un assemblage ;
- la figure 8 schématise une machine d'extrusion permettant de fabriquer une pièce monobloc de l'invention ;
- la figure 9 illustre un exemple de pièce monobloc obtenue par un procédé d'extrusion avec séquencement d'introduction de matières premières ;
- la figure 10 illustre la chambre d'extrusion en sortie de plusieurs corps d'extrudeuse dans le cas de machine de co-extrusion ;
- la figure 11 illustre un premier exemple de pièce monobloc obtenue par une machine de co-extrusion ;
- la figure 12 illustre un second exemple de pièce monobloc obtenue par une machine de co-extrusion ;
- la figure 13 illustre une vue en élévation d'un tronçon de filière comportant un canal de refroidissement utilisé dans un exemple de procédé d'extrusion de l'invention ;
- la figure 14 illustre une vue en élévation d'une plaque d'isolation incorporée entre des tronçons de la filière illustrée en figure 11 ;
- la figure 15 illustre une vue d'une machine d'extrusion utilisée dans un procédé de l'invention ;
- la figure 16 illustre une variante de pièce monobloc en configuration repliée ;
- la figure 17 illustre une vue éclatée d'un exemple de module thermique de l'invention ;
- la figure 18 illustre un générateur thermique intégrant le module thermique illustré en figure 17.

De manière générale, la pièce monobloc de la présente invention comprend une structure intégrée au sein de matériau(x) magnétocalorique(s) dans laquelle des régions ajourées sont prévues de manière calibrée et présentant des paramètres géométriques optimisés pour le passage d'un fluide caloporteur.

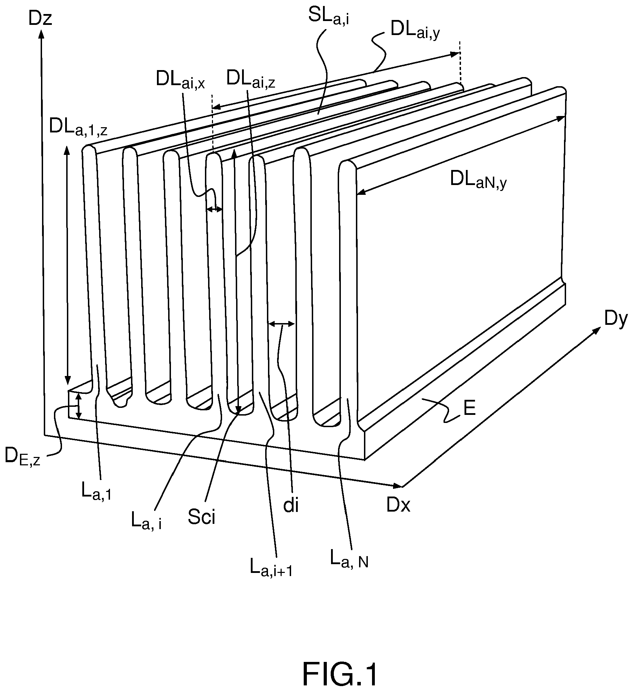

Selon une variante de l'invention, la pièce monobloc peut comprendre une structure en forme de peigne. Un premier exemple de cette variante particulièrement avantageuse, est illustrée en figure 1.

Plus précisément, la pièce monobloc comprend dans cette configuration, une structure en forme de peigne avec une embase E et un ensemble de lames L_{a,1},...., L_{a,i}, ...., L _{a,N} solidaires de ladite embase. Les dimensions de ces lames sont selon les directions représentées Dx, Dy et Dz respectivement : D_{Lai,x}, D_{Lai,y} et D_{Lai,z} .

Deux lames L_{a,i}, et L_{a,i+1} sont par ailleurs espacées d'une distance dᵢ destinée à correspondre à une lame de fluide circulant entre lesdites lames, , sauf dans un cas d'assemblage où la distance ne sera pas la même (deux lames de fluide et une lame de matériau)..

La pièce monobloc peut être constituée d'un unique matériau magnétocalorique. Il peut s'agir d'un matériau à base de poudre dont la composition et la structure métallurgique restent compatibles avec les procédés de mise en oeuvre décrits ci-dessous. Il peut également s'agir d'un matériau composite comprenant un liant organique par exemple en polymère pouvant être du polypropylène et dans lequel est dispersée une poudre de matériau magnétocalorique. Typiquement le taux de charge de poudre en volume peut être de l'ordre de 50 % à 90%.

Pour les applications recherchées de technologie de froid magnétique, dans lesquelles on souhaite optimiser l'interaction entre un liquide caloporteur pouvant être à base d'eau et la pièce de matériau magnétocalorique soumis à des alternances magnétiques, on cherche à contrôler et optimiser les principales caractéristiques suivantes mises en jeu dans les processus d'échange thermique.

Ces principales caractéristiques déterminantes sont répertoriées selon les critères suivants :
critère 1 : le coefficient d'échange thermique : h (W/m^{2.}K) ;
critère 2 : l'épaisseur de la lame de liquide caloporteur ;
critère 3 : la hauteur de la lame de liquide caloporteur ;
critère 4 : l'épaisseur de la lame de matériau(x) magnétocalorique(s) ;
critère 5 : la hauteur de la lame de matériau(x) magnétocalorique(s) ;
critère 6 : la longueur de la lame de matériau(x) magnétocalorique(s) ;
critère 7 : le nombre de lames de matériau(x) magnétocalorique(s).

Les critères 2 à 7 définissent ainsi la géométrie du bloc de matériau magnétocalorique. Ces critères combinés au critère 1 permettent de définir la capacité d'échange thermique du bloc de matériau magnétocalorique.

Ceci se traduit par une géométrie de bloc de matériau magnétocalorique comportant des rainures de faibles épaisseurs dans lesquelles circule le liquide caloporteur. Ces lames de matériau d'épaisseur réduite délimitent ainsi entre elles des lames de liquide.

Si les lames de matériaux sont trop épaisses, le liquide ne pourra pas extraire suffisamment rapidement l'énergie provenant de l'effet magnétocalorique de la lame avant le cycle suivant (la conductivité thermique du matériau limite le flux de transfert thermique).

Si la lame d'eau n'est pas assez haute, la surface d'échange existante sur les deux faces des lames de matériau magnétocalorique ne suffira pas pour extraire suffisamment de puissance en fonction du coefficient h.

Le coefficient d'échange thermique h dépend fortement de l'épaisseur de la lame d'eau. Il s'accroit quand l'épaisseur de la lame d'eau diminue.

C'est pourquoi typiquement les dimensions des lames et des espaces entre lames peuvent avantageusement être les suivants :
- 0,1 mm ≤ D _{Lai,x} ≤ 0,8 mm ;
- 10 mm ≤ D _{Lai,y} ≤ 100 mm ;
- 5 mm ≤ D _{Lai,z} ≤ 25 mm et de préférence D _{Lai,z} peut être de l'ordre de 12 mm ;
- 0,1 ≤ dᵢ ≤ 1 mm et de préférence dᵢ : peut être de l'ordre de 0,2 mm.

Selon l'exemple illustré en figure 1, la pièce monobloc comprend en outre, des surfaces spécifiques entre les lames de manière à optimiser la vitesse de circulation de fluide caloporteur entre lesdites lames et à limiter l'apparition de turbulences dans le fluide caloporteur. Pour ce faire, des surfaces concaves S_{ci} situées entre deux lames adjacentes D _{Lai}, D _{Lai+1}, au niveau de l'embase E présentant des rayons de courbure adéquats peuvent être prévues. Les surfaces supérieures des lames peuvent également être des surfaces S_{La,i} convexes.

Parmi toutes les lames solidaires de l'embase, il peut être intéressant de réaliser un élément différenciant permettant lors de production de masse de reconnaître par exemple une pièce monobloc d'une autre, en termes de propriétés thermiques en liaison avec le ou les matériaux qui la constituent. Pour cela, il peut être prévu une surface d'embase entre deux lames consécutives plus concave que les autres ou une hauteur de lame supérieure à celle des autres lames. La surface concave entre les lames L_{a,1} et L_{a,2} est plus creusée.

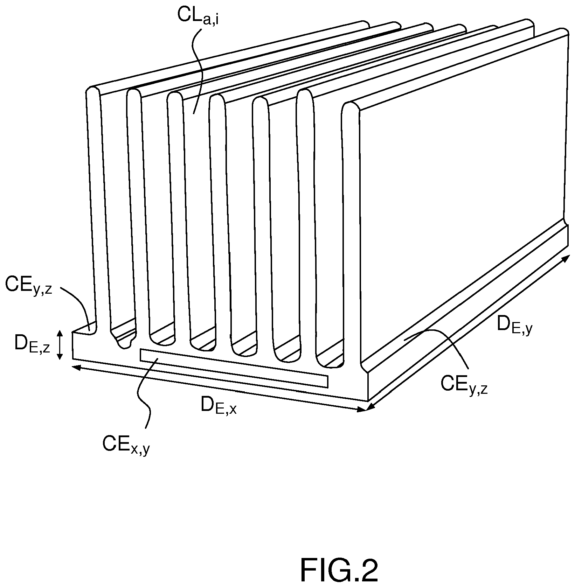

Selon un second exemple de cette variante de l'invention, illustré en figure 2, la pièce monobloc comprend de plus un canal dit d'embase C_{Ex,y} réalisé dans l'embase de manière à augmenter la surface d'échange thermique avec un fluide d'échange thermique. Il est à noter que le décalage ou retrait des lames d'extrémité, soit les lames L_{a,1} et L_{a,N} par rapport au bord de l'embase permettra également de pouvoir constituer des canaux latéraux C_{Ey,z} et ce en complément des canaux définis entre les lames CL_{a,i} lorsque la pièce sera positionnée dans un logement prévu à cet effet dans un module thermique de générateur de froid.

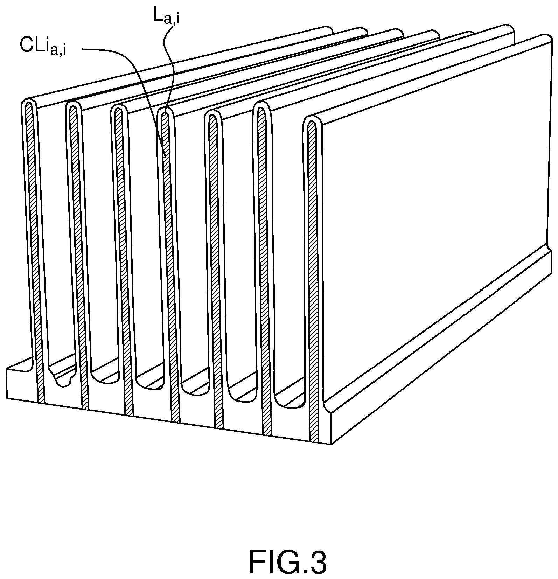

Selon un troisième exemple de cette variante de l'invention, illustré en figure 3, les lames de matériaux magnétocaloriques peuvent comprendre des canaux intégrés CLi _{a,i} dans lesdites lames L_{a,i} et débouchant ou non au niveau de l'embase, la représentation en figure 3, étant relative à une configuration avec canaux débouchant.

Selon un quatrième exemple non illustré de cette variante de l'invention, lesdits canaux intégrés CLi _{a,i} dans lesdites lames L_{a,i} peuvent comprendre un matériau magnétocalorique ou non présentant une perméabilité magnétique plus importante que celle du matériau formant lesdites lames L_{a,i}, l'intégration d'un tel matériau permet d'augmenter l'intensité de l'induction magnétique lorsque la pièce monobloc est soumise à un champ magnétique.

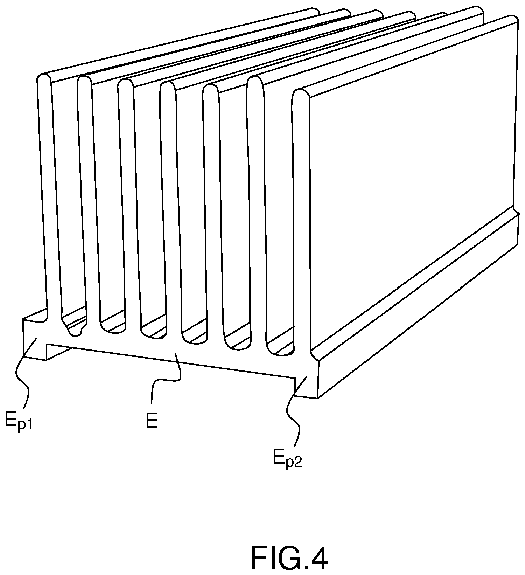

Selon un cinquième exemple de cette variante de l'invention, illustré en figure 4, il peut également être prévu un ou des renfoncements au niveau de l'embase, l'embase E comportant des parties périphériques Eₚ₁ et Eₚ₂. La présence de ces parties périphériques Eₚ₁ et Eₚ₂ permet également de pouvoir constituer des canaux complémentaires pour le fluide caloporteur lorsque la pièce est positionnée dans un logement prévu à cet effet dans un module thermique de générateur de froid.

Selon une autre variante de l'invention non illustrée, la pièce monobloc peut aussi comprendre un matériau magnétocalorique massif comportant des régions ajourées destinées à l'écoulement d'un fluide caloporteur, lesdites régions étant ajourées selon une seconde direction Dy, perpendiculaire à une première direction Dx et à une troisième dimension Dz.

Les dimensions de ces régions ajourées selon la direction Dx, et dR_{ai,z} selon la direction Dz sont d'un ordre de grandeur inférieur à la dimension dR_{ai,y} selon la seconde dimension.

Les distances entre zones ajourées peuvent typiquement être de l'ordre de quelques dizaines de millimètres.

Dans ce type de configuration, les zones ajourées peuvent être organisées dans une structure type nid d'abeille avec des régions ajourées de forme hexagonale.

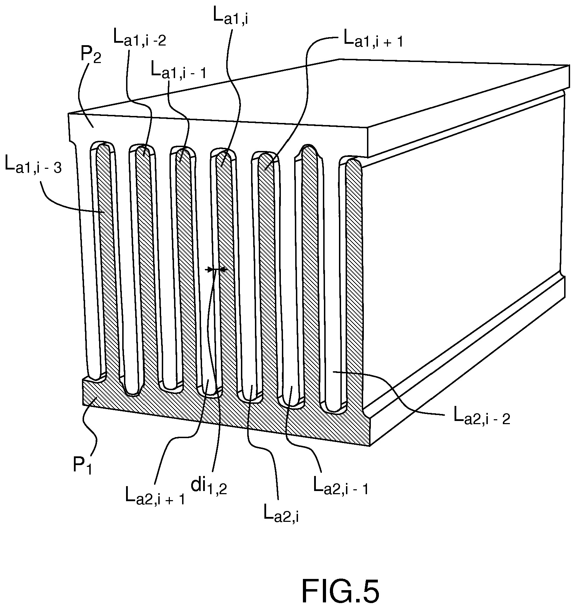

Avantageusement des modules thermiques utilisant des pièces monobloc incorporées dans des générateurs thermiques peuvent intégrer des pièces complexes dans lesquelles deux pièces monobloc de l'invention, P₁ et P₂, sont encastrées tête-bêche comme illustré en figure 5. Cette configuration permet de réduire encore davantage, l'épaisseur des lames de fluide définies par la distance di_{1,2} représentée en figure 4 et ce entre les lames L_{a1,i} et Lₐ₂, ᵢ ou L_{a2, i} et L_{a1, i+1}. On peut ainsi typiquement atteindre des épaisseurs de lames de fluide di_{1,2} même inférieures à 0,1 mm, alors que cela est irréalisable actuellement avec les techniques connues.

Dans ce cas, il est avantageux de prévoir au moins un élément de positionnement, qui peut être aussi un élément de marquage de lames en matériaux de caractéristiques différentes d'un premier bloc, ledit élément de positionnement étant constitué par au moins une lame de troisième dimension supérieure à celle(s) des autres lames positionnée en face d'une surface du deuxième bloc creusée dans l'embase, ledit creusement étant dimensionné pour être complémentaire de l'extrémité de la au moins une lame dudit premier bloc. Une configuration de ce type est illustrée sur la figure par la deuxième lame en partant de la droite et le deuxième creux en partant de la gauche du bloc du bas de la figure 5.

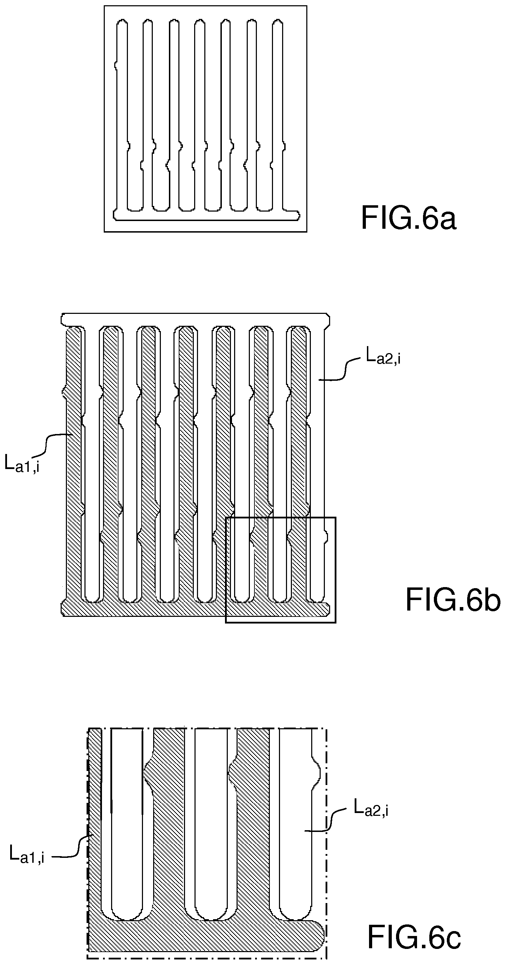

Selon une variante de l'invention, illustrée en figures 6a, 6b et 6c, la pièce monobloc peut avantageusement comprendre des lames présentant des protubérances permettant d'imposer un espacement relativement constant entre les lames et ce en fonctionnement lors de l'écoulement d'un fluide entre lesdites lames La,i, permettant également d'en renforcer la tenue mécanique. Dans la structure complexe, la présence de ces protubérances permet également d'en renforcer la tenue mécanique.

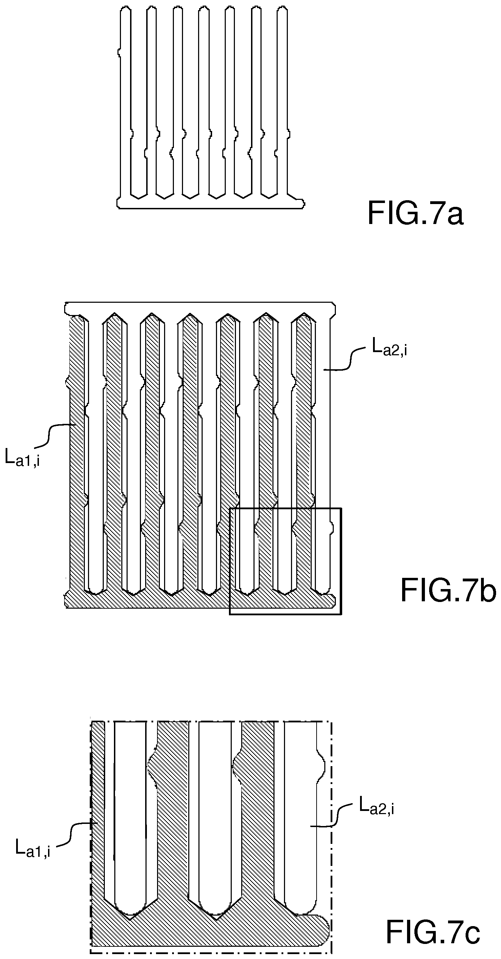

Selon une autre variante de l'invention, illustrée en figures 7a, 7b et 7c, une pièce monobloc comprenant des lames avec protubérances peut de plus venir s'encastrer dans une pièce monobloc présentant quant à elle, des motifs creusés au niveau de l'embase, permettant aux extrémités des lames La,i de la pièce complémentaire de venir se mettre en appui, afin d'assurer une tenue mécanique accrue en fonctionnement.

Pour mettre en oeuvre la présente invention, il est proposé d'utiliser un procédé d'extrusion pour réaliser la géométrie de la pièce monobloc, ce procédé permettant d'atteindre les dimensions requises avec une excellente reproductibilité et un coût de fabrication particulièrement intéressant.

En effet, pour réaliser des pièces présentant de très faibles dimensions entre les lames de matériau magnétocalorique correspondant à de très fines lames de fluide, on est conduit actuellement à réaliser dans un premier temps un bloc massif de matériau magnétocalorique puis à usiner ce bloc dans un second temps. Le bloc peut être réalisé par frittage de poudre à environ 1200°C, on peut tenter de réaliser par électroérosion des canaux, mais le frittage génère des contraintes et des tensions mécaniques dans les blocs. Cela peut conduire à la cassure des blocs ou des lames déjà réalisées. Par ailleurs le diamètre de fil d'électroérosion permettant d'atteindre des dimensions inférieures à quelques dixièmes de millimètres devient un réel problème, car le fil doit présenter un diamètre très faible, ce qui le rend très fragile.

De manière générale, l'extrusion est un procédé de transformation en continu d'une matière malléable homogénéisée et fusionnée par malaxage et échauffement (mécanique et thermique). Dans un fourreau (cylindre), la matière comprimée et malaxée par une ou plusieurs vis, est poussée vers une filière, pour être mise en forme.

Plus précisément, l'extrudeuse comprend un corps d'extrudeuse équipé d'au moins un fourreau cylindrique chauffant (thermorégulé) à l'intérieur duquel tourne une (ou deux) vis motorisée, le corps de l'extrudeuse est alimenté à travers des ouvertures dans ledit fourreau par des doseurs ayant des trémies d'alimentation en granulés ou en poudre.

La vis d'extrusion malaxe, compresse, cisaille, échauffe et transporte en continu la matière fluidifiée et homogénéifiée vers la filière. Celle-ci confère à la masse fluidifiée, la forme désirée en poussant la matière au travers de la filière.

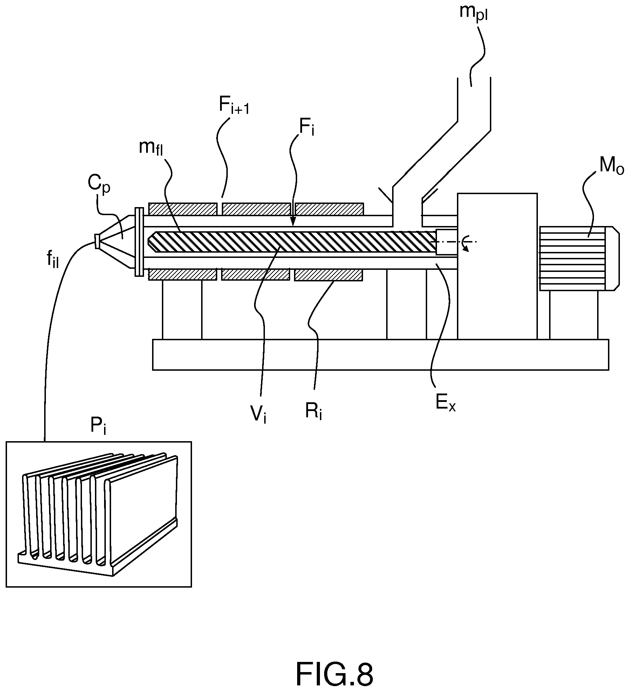

Dans la présente invention, on peut utiliser une machine d'extrusion telle que celle schématisée en figure 8 et notamment pour réaliser des pièces monobloc de matériau composite à base de poudre de matériau magnétocalorique et de liant, le liant pouvant être en polypropylène, ou en polycarbonate ou en polyéthylène.

Une telle machine comprend notamment :
- un corps d'extrusion Ex comprenant lui-même un ensemble de modules élémentaires de fourreaux Fi, pilotés par au moins un système de chauffage ;
- le corps d'extrusion qui comprend avantageusement deux vis d'extrusion co-rotatives référencées dans leur ensemble Vi, tournant dans le même sens et permettant par là même d'atteindre des pressions en sortie de l'ordre de 150 bars. Lesdites vis d'extrusion peuvent comporter différents modules de malaxage, décompression, d'accélération, etc. Ainsi les matières premières introduites dans le corps de l'extrudeuse sont transférées d'un module de vis à l'autre qui coopèrent pour augmenter la capacité de mélange, la compression et le transport des matières premières introduites ;
- le cas échéant, une chambre de compression CP qui reçoit la matière m_{fl} fluidifiée et malaxée, et la propulse vers une ou plusieurs filières ;
- une filière fᵢₗ réplique de la forme de la pièce monobloc de matériau composite à base de poudre de matériau magnétocalorique et de liant mₚₗ.

Par exemple, la vis d'extrusion peut avoir une longueur comprise entre 1 et 4 mètres, de préférence 2 mètres, sa longueur peut correspondre à son diamètre multiplié par un coefficient compris entre 10 et 24.

La vitesse de rotation est comprise entre 80 et 400 tr/min, la pression maximale pouvant être de 200 bars environ, sachant qu'il est possible de prévoir une valve-écluse s'ouvrant et évacuant la matière lorsque la pression est trop importante (typiquement supérieure à 200 bars).

La température de la matière peut être comprise entre 180°C (correspondant à la température de la vis d'extrusion et du fourreau) et 240°C. La température de la filière peut, quant à elle, être supérieure de quelques degrés par rapport à la température de la matière afin de diminuer l'adhérence de la matière à la filière.

La vis d'extrusion peut comprendre plusieurs éléments ou modules de vis différents, avec des pas de vis différents et/ou inversés, et également avec des éléments de malaxage (pouvant être empilés sur les axes des vis d'extrusion).

Grâce au procédé choisi pour mettre en oeuvre l'invention, il est possible d'alimenter de manière séquencée le corps de l'extrudeuse de manière à former successivement des tronçons de bandes de matériaux différents selon la direction Dy.

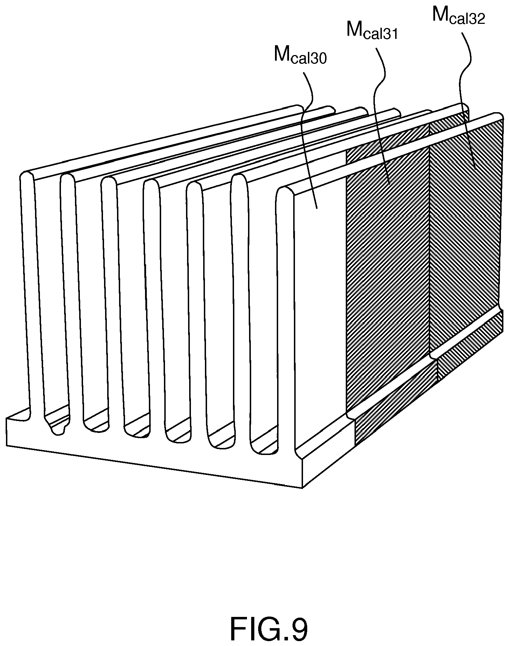

Ainsi selon une autre variante de l'invention illustrée en figure 9, les lames peuvent comporter des régions constituées de matériaux magnétocaloriques différents permettant de disposer d'une latitude supplémentaire en terme de température globale de fonctionnement dépendante des températures de Curie des différents matériaux. Comme représenté, trois régions comprennent respectivement un premier matériau magnétocalorique M_{cal30}, un second matériau magnétocalorique M_{cal31}, un troisième matériau magnétocalorique M_{cal32}. Il peut être avantageux lors de la fabrication de masse de pièces monobloc d'alimenter le corps d'extrudeuse via différentes doseuses d'alimentation réparties le long du corps de l'extrudeuse et selon la séquence suivante puis de procéder à une découpe globale de l'ensemble de pièces unitaires :
- alimentation via la doseuse en poudre de matériau M_{cal30} ;
- alimentation via la doseuse en poudre de matériau M_{cal31} ;
- alimentation via la doseuse en poudre de matériau M_{cal32} ;
- alimentation via la doseuse en poudre de matériau M_{cal32} ;
- alimentation via la doseuse en poudre de matériau M_{cal31} :
- alimentation via la doseuse en poudre de matériau M_{cal30} ;
- alimentation via la doseuse en poudre de matériau M_{cal30}, ...,

et suivant, de manière à réaliser des interfaces de grande qualité lors de l'opération de découpe, en raison du fait que la découpe a lieu au sein d'un même matériau et non à l'interface entre deux matériaux différents.

Il est également particulièrement intéressant et adapté d'utiliser un procédé de co-extrusion pour réaliser une pièce monobloc en différents matériaux selon des plans parallèles au plan défini par les directions Dx, Dy.

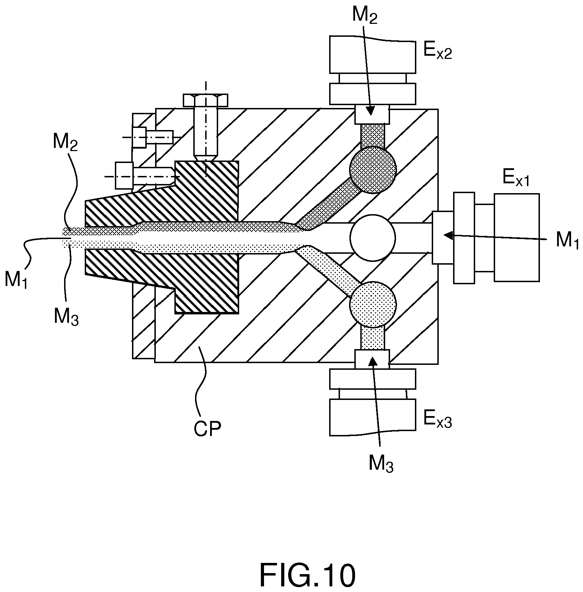

Pour ce faire, on utilise en parallèle, plusieurs corps d'extrudeuse, débouchant dans une unique chambre de compression CP comme le schématise la figure 10, qui montre une chambre de compression alimentée par trois corps d'extrudeuse Ex₁, Ex₂ et Ex₃, alimentés eux-mêmes par différents matériaux M₁, M₂, M₃.

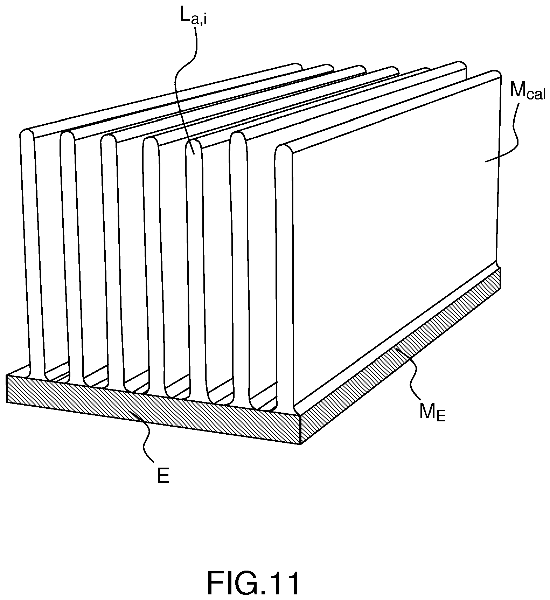

Il est ainsi possible de former notamment, la pièce monobloc illustrée en figure 11 dans laquelle l'embase E est réalisée dans un premier matériau dit d'embase M_{E}, les lames étant réalisées dans un second matériau M_{cal}, ledit second matériau étant un matériau magnétocalorique, alors que le matériau d'embase peut ne pas l'être.

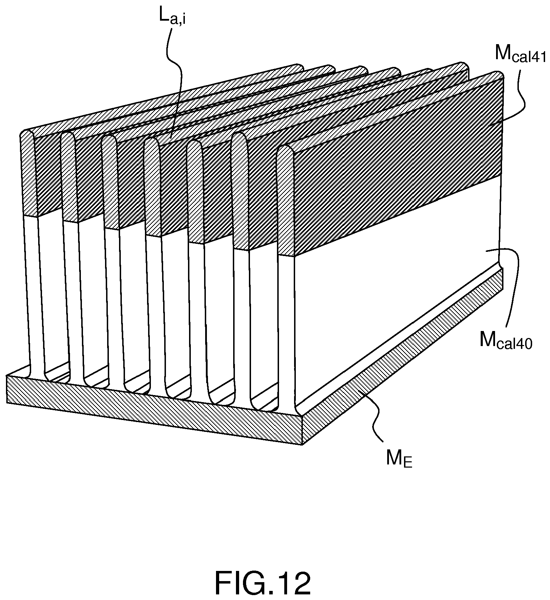

Selon une autre variante illustrée en figure 12, les lames L_{a,i} peuvent être constituées en deux matériaux différents magnétocaloriques M_{cal40} et M_{cal41} répartis selon la direction Dz, l'embase pouvant ou non être constituée dans un troisième matériau dit d'embase M_{E} pouvant être ou non magnétocalorique.

De manière générale, dans le procédé de fabrication par extrusion ou co-extrusion, il peut être prévu un moyen de refroidissement de ladite pièce monobloc pour assurer un maintien de sa forme après sa sortie de ladite filière fᵢₗ. L'intérêt de ce moyen de refroidissement est d'éviter que la pièce monobloc ne se déforme lorsqu'elle sort de la filière f_{il.} Ce refroidissement a pour but d'amener la pièce monobloc en un temps très court d'une température d'environ 200°C à une température proche de la température ambiante. Ce moyen de refroidissement peut être décliné selon plusieurs variantes.

Une première variante non représentée consiste à utiliser des moyens externes de refroidissement et ainsi à refroidir la pièce monobloc en sortie de la filière avec une lame d'air à basse température (environ 5°C par exemple) et à faible vitesse (vitesse adaptée pour ne pas déformer la pièce monobloc).

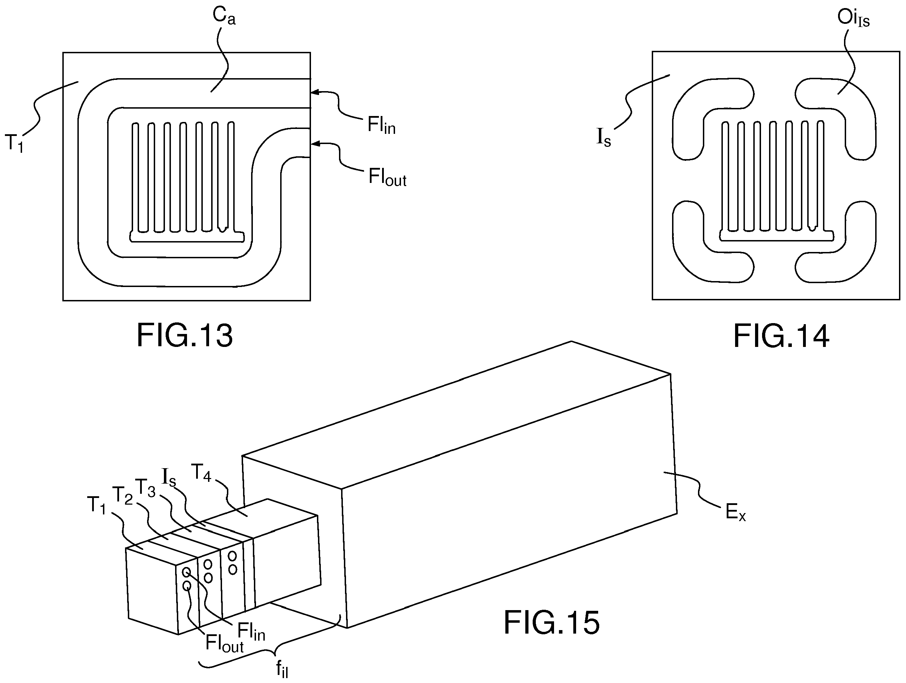

Une seconde variante représentée grâce aux figures 13 à 15 consiste à intégrer le moyen de refroidissement dans la filière fᵢₗ comportant l'empreinte de la pièce monobloc. On peut à cet effet prévoir une filière fᵢₗ comportant plusieurs tronçons Ti dont le dernier au moins (situé à la sortie) comporte au moins un canal Cₐ pour la circulation d'un fluide de refroidissement (liquide ou gazeux), avec une entrée Fₗᵢₙ et une sortie Fₗₒᵤₜ. La température de ce fluide permet de refroidir la pièce monobloc alors même qu'elle est en train d'être mise en forme dans la filière fᵢₗ. Une pièce Iₛ d'isolation thermique réalisée par exemple par une plaque en matière synthétique ou composite telle que du PEEK peut être montée entre au moins deux tronçons de la filière f_{il,} cette plaque isolante illustrée en figure 14 comprend dans une variante des ouvertures Oiₗₛ et une forme ajourée proche de l'empreinte de la pièce

La figure 15 représente une vue schématique d'une machine d'extrusion dont la filière comporte quatre tronçons T₁, T₂, T₃ et T₄. Les tronçons T₁, T₂ et T₃ comportent un canal de refroidissement destiné à la circulation d'un fluide de refroidissement. Le tronçon T₄ réalise la forme initiale de la pièce. Les trois tronçons T₁, T₂ et T₃ sont isolés thermiquement du premier tronçon T₄ par une plaque d'isolation Iₛ présentant des zones creuses ou ouvertures Oiₗₛ (sans matière). Dans une telle configuration, il peut être envisagé ou non de refroidir graduellement la pièce monobloc en faisant circuler des fluides à températures différentes dans les différents tronçons T₁, T₂, T₃. Le fluide circulant dans le tronçon T₃ peut présenter la température la plus élevée et celui circulant dans le tronçon T₁ peut présenter la température la plus faible. Il est envisageable également d'intégrer d'autres plaques d'isolation, notamment entre les tronçons comportant un canal de refroidissement.

L'invention n'est pas limitée à un tel nombre de tronçons, on peut envisager par exemple l'intégration de deux tronçons : un tronçon comportant un canal de refroidissement et un autre tronçon sans canal de refroidissement.

Selon la présente invention, les pièces monobloc décrites précédemment peuvent avantageusement être intégrées dans un module thermique.

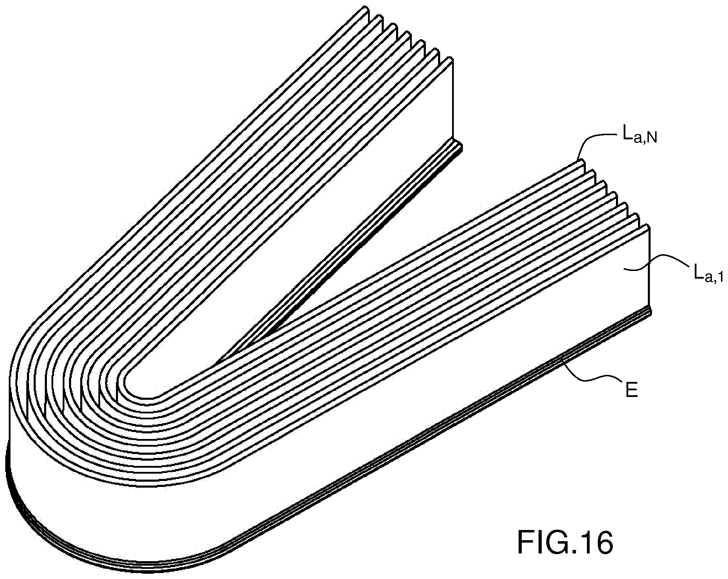

Pour cela selon une variante avantageuse, la pièce monobloc peut présenter une géométrie en forme de V, l'ensemble des lames sur leur embase étant courbé selon la seconde direction Dy, comme illustré en figure 16.

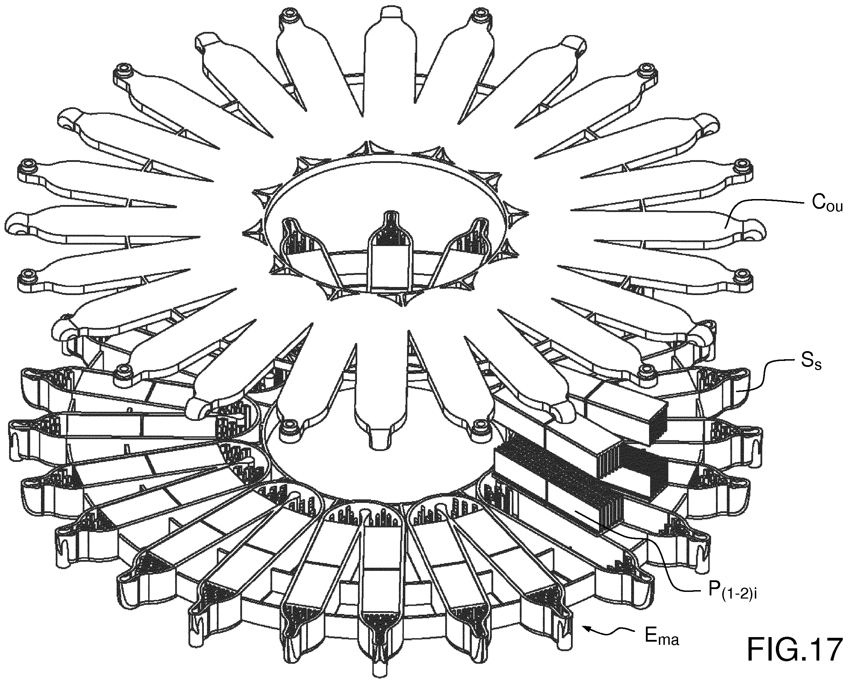

La figure 17 illustre une vue éclatée de l'ensemble des éléments constitutifs d'un exemple de configuration de module thermique intégrant des ensembles élémentaires, comportant chacun un plusieurs pièces complexes P₍₁₋₂₎ᵢ comprenant des paires de pièces monobloc appariées tête-bêche. Avantageusement, le module peut comprendre une structure support Sₛ en forme de disque plat, recouverte d'un couvercle Cₒᵤ. Le positionnement sous forme de V, des pièces monobloc dans un disque plat avec des entrée/sortie de fluide aux extrémités des branches des V est particulièrement bien adapté. En effet, cette configuration permet d'une part de mettre beaucoup de masse de matériaux dans un volume restreint et d'autre part de simplifier le circuit de fluide caloporteur (non représenté), les conduits pouvant être connectés aux extrémités libres des V.

Dans une variante non illustrée, la structure support S_{S} est apte à recevoir des pièces complexes comportant deux pièces monobloc encastrées tête-bêche telles que représentées en figure 5.

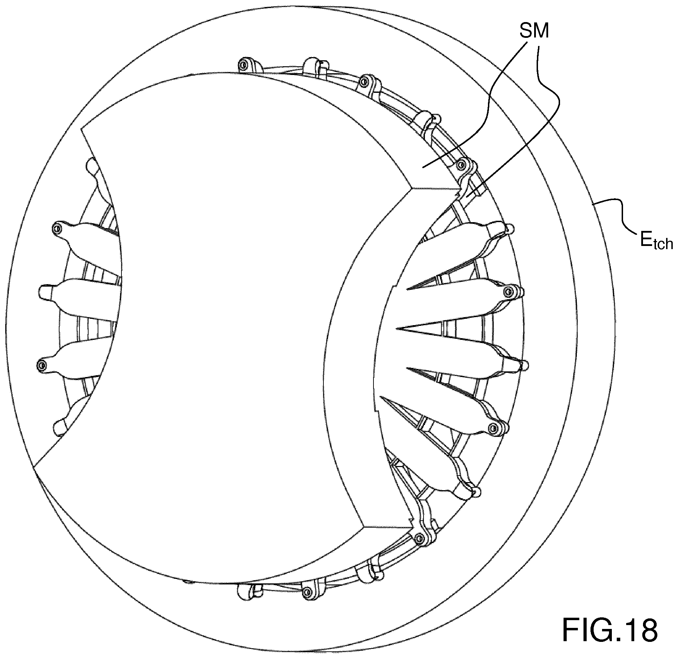

La figure 18 illustre un générateur thermique intégrant le module illustré en figure 17, couplé à un système magnétique SM et à un échangeur thermique E_{tch}.

## Revendications

1. Pièce comprenant un matériau magnétocalorique ne comprenant pas un alliage comprenant du fer et du silicium et un lanthanide **caractérisée en ce que** :
- ladite pièce est une pièce monobloc et comporte une embase (E) située dans un premier plan défini par une première direction (Dx) et par une seconde direction (Dy) et un ensemble de N lames unitaires (L_{a,i}) solidaires de ladite embase (E) ;
- lesdites lames présentant une première dimension (D_{Lai,x}) selon la première direction (Dₓ), une seconde dimension (D_{Lai,y}) selon la seconde direction (D_{y}) et une troisième dimension (D_{Lai,z}) selon une troisième direction (Dz) perpendiculaire aux première et seconde dimensions ;
- une ième lame étant séparée d'une (i+1)ème lame par une ième distance (dᵢ) ;
- le rapport entre la seconde (D_{Lai,y}) et la première dimension (D_{Lai,x}) étant supérieur ou égal à 10 ;
- le rapport entre la troisième dimension (D_{Lai,z}) et la première dimension (D_{Lai,x}) étant supérieur ou égal à 6 ;
- la première dimension étant du même ordre de grandeur que ladite distance (di) séparant une ième lame (L_{a,i}), d'une (i+1)ème lame (L_{a,i+1}).

2. Pièce monobloc selon la revendication 1 , **caractérisée en ce que** la première dimension est comprise entre environ 0,1 mm et 0,8 mm (0,1 mm ≤ D _{Lai,x} ≤ 0,8 mm).

3. Pièce monobloc selon l'une des revendications 1 à 2, **caractérisée en ce que** la seconde dimension est comprise entre environ 10 mm et 100 mm (10 mm ≤ D _{Lai,y} ≤ 100mm).

4. Pièce monobloc selon l'une des revendications 1 à 3, **caractérisée en ce que** la troisième dimension est comprise entre environ 6 mm et 25 mm (6 mm ≤ D _{Lai,z} ≤ 25mm) et pouvant être de l'ordre de 12 mm.

5. Pièce monobloc selon l'une des revendications 1 à 4, **caractérisée en ce que** la distance (di) entre une ième lame et une (i+1)ème lame est comprise entre environ 0,1 mm et 1 mm (0,1 ≤ dᵢ ≤ 1mm).

6. Pièce monobloc selon l'une des revendications 1 à 5, **caractérisée en ce que** les lames comportent des surfaces supérieures convexes (S_{La,i}).

7. Pièce monobloc selon l'une des revendications 1 à 6, **caractérisée en ce que** ladite embase comporte des surfaces creusées (S_{Ci}) entre une ième lame et une (i+1)ème lame.

8. Pièce monobloc selon la revendication 7, **caractérisée en ce que** ladite embase comporte des surfaces concaves entre une ième lame et une (i+1)ème lame.

9. Pièce monobloc selon l'une des revendications 1 à 8, **caractérisée en ce que** l'ensemble des lames comporte au moins une lame de troisième dimension différente de celle des autres lames permettant de constituer un élément de marquage et/ou de positionnement de ladite pièce monobloc.

10. Pièce monobloc selon l'une des revendications 1 à 9, **caractérisée en ce que** ladite embase comporte au moins une surface entre une ième lame et une (i+1)ème lame, creusée différemment des autres surfaces creusées, permettant de constituer un élément de marquage et/ou de positionnement de ladite pièce monobloc.

11. Pièce monobloc selon l'une des revendications 1 à 10, **caractérisée en ce qu'**au moins un sous-ensemble de lames présente au moins une protubérance s'étendant le long de la seconde direction Dy, ladite protubérance étant située entre l'embase et l'extrémité de la lame opposée à ladite embase, de manière à calibrer l'espace entre deux lames adjacentes.

12. Pièce monobloc selon l'une des revendications 1 à 11, **caractérisée en ce que** :
- le rapport entre la dimension selon la troisième direction de l'embase (D_{E,z}) et la dimension selon la deuxième direction de l'embase (D_{E,y}) est compris entre environ 1/5 et 1/30 ;
- le rapport entre la dimension selon la troisième direction de l'embase (D_{E,z}) et la troisième dimension (D_{Lai,z}) est de l'ordre 1/20 ;
- la première dimension (D_{Lai,x}) étant préférentiellement sensiblement égale à la dimension selon la troisième direction de l'embase (D_{E,z}).

13. Pièce monobloc selon l'une des revendications 1 à 12, **caractérisée en ce que** l'embase étant constituée d'un matériau d'embase, les lames sont constituées d'au moins un matériau magnétocalorique, le matériau d'embase et le matériau magnétocalorique étant différents.

14. Pièce monobloc selon l'une des revendications 1 à 13, **caractérisée en ce qu'**elle comprend au moins deux séries de lames constituées d'au moins deux matériaux magnétocaloriques différents.

15. Pièce monobloc selon l'une des revendications 1 à 14, **caractérisée en ce qu'**au moins un sous-ensemble de lames comprend des régions réparties selon la seconde direction (Dy) constituées de matériaux magnétocaloriques différents.

16. Pièce monobloc selon l'une des revendications 1 à 15, **caractérisée en ce qu'**au moins un sous-ensemble de lames comprend des régions réparties selon la troisième direction (Dz) constituées de matériaux magnétocaloriques différents.

17. Pièce monobloc selon l'une des revendications 1 à 16, **caractérisée en ce qu'**elle comporte des lames présentant des canaux intégrés (CLi_{a,i}) débouchant ou non au niveau de l'embase.

18. Pièce monobloc selon l'une des revendications 1 à 17, **caractérisée en ce que** l'embase comporte au moins un canal (C_{E x,y}) dans ledit premier plan, dédié au passage d'un fluide.

19. Pièce monobloc selon l'une des revendications 1 à 18, **caractérisée en ce que** l'embase comporte des parties périphériques (Eₚ₁, Eₚ₂).

20. Pièce monobloc selon l'une des revendications 1 à 19, **caractérisée en ce qu'**au moins la 1^{ère} lame (L_{a,1}) ou la Nième lame (L_{a,N}), située en périphérie de l'embase est décalée par rapport à l'extrémité de ladite embase, dans ledit premier plan.

21. Pièce monobloc selon l'une des revendications 1 à 20, **caractérisée en ce qu'**elle présente une configuration au moins partiellement repliée le long de ladite seconde direction, pouvant être en forme de V.

22. Pièce monobloc selon l'une des revendications 1 à 21, **caractérisée en ce qu'**au moins un matériau magnétocalorique est choisi parmi : le Gadolinium, un alliage de la famille MnFe, un alliage de MnFeSn et un alliage de la famille du GdTb.

23. Pièce monobloc selon l'une des revendications 1 à 21, **caractérisée en ce qu'**au moins un matériau magnétocalorique est un matériau composite comprenant au moins une poudre d'un premier matériau magnétocalorique et un liant organique.

24. Pièce monobloc selon la revendication 23, **caractérisée en ce que** le liant est en polypropylène, ou en polycarbonate ou en polyéthylène.

25. Pièce complexe comprenant deux pièces monobloc selon l'une des revendications 1 à 24, lesdites deux pièces (P₁,P₂) étant encastrées tête-bêche, permettant de réduire l'espace libre entre lames.

26. Pièce complexe comprenant deux pièces monobloc selon la revendication 25, **caractérisée en ce que** :
- une première pièce comporte un ensemble des lames comprenant au moins une lame de troisième dimension supérieure à celle des autres lames ;
- une seconde pièce comporte une embase comprenant autant de surfaces creusées sur de plus grandes profondeurs que de lames de troisième dimension supérieure à celle des autres lames,
- ladite au moins une lame de troisième dimension supérieure de la première pièce étant de forme complémentaire d'une des surfaces creusées sur une plus grande profondeur de la deuxième pièce.

27. Module thermique contenant au moins un élément magnétocalorique comprenant des ouvertures destinées à être traversées par un fluide caloporteur, **caractérisé en ce que** ledit élément magnétocalorique comporte au moins une pièce monobloc ou une pièce complexe selon l'une des revendications 1 à 26.

28. Module thermique selon la revendication 27, **caractérisé en ce qu'**il comporte un arrangement annulaire équipé de logements, lesdits logements comportant des pièces monobloc et pouvant comprendre des canaux destinés au passage d'un fluide caloporteur.

29. Module thermique selon l'une des revendications 27 ou 28, **caractérisé en ce qu'**il comporte une structure de disque plat présentant des branches distribuées de manière radiale, lesdites branches comprenant lesdits logements et des extrémités en forme de V pouvant comporter des entrées/sorties de fluide caloporteur.

30. Générateur thermique comprenant au moins un module thermique selon l'une des revendications 27 à 29, traversé par un fluide caloporteur entraîné en déplacement alterné de part et d'autre dudit élément magnétocalorique, ledit générateur comprenant un arrangement magnétique mis en mouvement pour soumettre alternativement ledit élément magnétocalorique à une variation de champ magnétique et créer alternativement dans ledit élément magnétocalorique, un cycle d'échauffement et de refroidissement.

## Patentansprüche

1. Teil, beinhaltend ein magnetokalorisches Material, welches keine Legierung beinhaltet, welche Eisen und Silizium und ein Lanthanid beinhaltet, **dadurch gekennzeichnet, dass**:
- das Teil ein einstückiges Teil ist und einen Sockel (E) beinhaltet, welcher in einer ersten Ebene befindlich ist, welche durch eine erste Richtung (Dx) und durch eine zweite Richtung (Dy) definiert wird, und eine Anordnung von N Einzelblättern (L_{a,i}) beinhaltet, welche fest mit dem Sockel (E) verbunden sind;
- die Blätter eine erste Abmessung (D_{Lai,x}) in der ersten Richtung (Dx), eine zweite Abmessung (D_{Lai,y}) in der zweiten Richtung (Dy) und eine dritte Abmessung (D_{Lai,z}) in einer dritten Richtung (Dz) aufweisen, welche rechtwinklig zur ersten und zur zweiten Abmessung ist;
- ein i-tes Blatt von einem (i+1)-ten Blatt durch einen i-ten Abstand (dᵢ) getrennt ist;
- das Verhältnis zwischen der zweiten (D_{Lai,y}) und der ersten Abmessung (D_{Lai,x}) größer oder gleich 10 ist;
- das Verhältnis zwischen der dritten (D_{Lai,z}) und der ersten Abmessung (D_{Lai,x}) größer oder gleich 6 ist;
- die erste Abmessung eine Abmessung der gleichen Größenordnung ist wie der Abstand (dᵢ), der ein i-tes Blatt (L_{a,i}) von einem (i+1)-ten Blatt (L_{a,i+1}) trennt.

2. Einstückiges Teil nach Anspruch 1, **dadurch gekennzeichnet, dass** die erste Abmessung zwischen ungefähr 0,1 mm und 0,8 mm (0,1 mm ≤ D _{Lai,x} ≤ 0,8 mm) beträgt.

3. Einstückiges Teil nach einem der Ansprüche 1 bis 2, **dadurch gekennzeichnet, dass** die zweite Abmessung zwischen ungefähr 10 mm und 100 mm (10 mm ≤ D _{Lai,y} ≤ 100 mm) beträgt.

4. Einstückiges Teil nach einem der Ansprüche 1 bis 3, **dadurch gekennzeichnet, dass** die dritte Abmessung zwischen ungefähr 6 mm und 25 mm (6 mm ≤ D _{Lai,z} ≤ 25mm) beträgt und in einer Größenordnung von 12 mm liegen kann.

5. Einstückiges Teil nach einem der Ansprüche 1 bis 4, **dadurch gekennzeichnet, dass** der Abstand (di) zwischen einem i-ten Blatt und einem (i+1)-ten Blatt zwischen ungefähr 0,1 mm und 1 mm (0,1 ≤ dᵢ ≤ 1 mm) beträgt.

6. Einstückiges Teil nach einem der Ansprüche 1 bis 5, **dadurch gekennzeichnet, dass** die Blätter konvexe obere Flächen (S_{La,i}) beinhalten.

7. Einstückiges Teil nach einem der Ansprüche 1 bis 6, **dadurch gekennzeichnet, dass** der Sockel vertiefte Flächen (S_{Ci}) zwischen einem i-ten Blatt und einem (i+1)-ten Blatt beinhaltet.

8. Einstückiges Teil nach Anspruch 7, **dadurch gekennzeichnet, dass** der Sockel konkave Flächen zwischen einem i-ten Blatt und einem (i+1)-ten Blatt beinhaltet.

9. Einstückiges Teil nach einem der Ansprüche 1 bis 8, **dadurch gekennzeichnet, dass** die Anordnung der Blätter mindestens ein Blatt dritter Abmessung beinhaltet, welche sich von derjenigen der anderen Blätter unterscheidet, welche die Bildung eines Kennzeichnungs- und/oder Positionierungselementes des einstückigen Teils ermöglicht.

10. Einstückiges Teil nach einem der Ansprüche 1 bis 9, **dadurch gekennzeichnet, dass** der Sockel mindestens eine Fläche zwischen einem i-ten Blatt und einem (i+1)-ten Blatt beinhaltet, welche abweichend von den anderen vertieften Flächen vertieft ist, welche die Bildung eines Kennzeichnungs- und/oder Positionierungselementes des einstückigen Teils ermöglicht.

11. Einstückiges Teil nach einem der Ansprüche 1 bis 10, **dadurch gekennzeichnet, dass** mindestens eine Unteranordnung von Blättern mindestens einen Vorsprung aufweist, welcher sich entlang der zweiten Richtung Dy erstreckt, wobei der Vorsprung zwischen dem Sockel und dem Ende des dem Sockel gegenüber liegenden Blattes befindlich ist, um so den Raum zwischen zwei benachbarten Blättern zu kalibrieren.

12. Einstückiges Teil nach einem der Ansprüche 1 bis 11, **dadurch gekennzeichnet, dass**:
- das Verhältnis zwischen der Abmessung entlang der dritten Richtung des Sockels (D_{E,z}) und der Abmessung entlang der zweiten Richtung des Sockels (D_{E,y}) zwischen ungefähr 1/5 und 1/30 beträgt;
- das Verhältnis zwischen der Abmessung entlang der dritten Richtung des Sockels (D_{E,z}) und der dritten Abmessung (D_{Lai,z}) in der Größenordnung von 1/20 beträgt;
- wobei die erste Abmessung (D_{Lai,x}) vorzugsweise im Wesentlichen der Abmessung entlang der dritten Richtung des Sockels (D_{E,z}) entspricht.

13. Einstückiges Teil nach einem der Ansprüche 1 bis 12, **dadurch gekennzeichnet, dass**, da der Sockel aus einem Sockelmaterial besteht, die Blätter aus mindestens einem magnetokalorischen Material bestehen, wobei das Sockelmaterial und das magnetokalorische Material sich voneinander unterscheiden.

14. Einstückiges Teil nach einem der Ansprüche 1 bis 13, **dadurch gekennzeichnet, dass** es mindestens zwei Serien von Blättern beinhaltet, welche aus mindestens zwei unterschiedlichen magnetokalorischen Materialien bestehen.

15. Einstückiges Teil nach einem der Ansprüche 1 bis 14, **dadurch gekennzeichnet, dass** mindestens eine Unteranordnung von Blättern Bereiche beinhaltet, welche entlang der zweiten Richtung (Dy) verteilt sind, welche aus unterschiedlichen magnetokalorischen Materialien bestehen.

16. Einstückiges Teil nach einem der Ansprüche 1 bis 15, **dadurch gekennzeichnet, dass** mindestens eine Unteranordnung von Blättern Bereiche beinhaltet, welche entlang der dritten Richtung (Dz) verteilt sind, welche aus unterschiedlichen magnetokalorischen Materialien bestehen.

17. Einstückiges Teil nach einem der Ansprüche 1 bis 16, **dadurch gekennzeichnet, dass** es integrierte Kanäle (C_{Lia,i}) beinhaltet, welche auf Höhe des Sockels münden, oder dort nicht münden.

18. Einstückiges Teil nach einem der Ansprüche 1 bis 17, **dadurch gekennzeichnet, dass** der Sockel mindestens einen Kanal (C_{Ex,y}) in der ersten Ebene beinhaltet, welcher zum Durchfluss eines Fluids bestimmt ist.

19. Einstückiges Teil nach einem der Ansprüche 1 bis 18, **dadurch gekennzeichnet, dass** der Sockel umlaufende Teile (Eₚ₁, Eₚ₂) beinhaltet.

20. Einstückiges Teil nach einem der Ansprüche 1 bis 19, **dadurch gekennzeichnet, dass** mindestens das 1-te Blatt (L_{a,1}) oder das N-te Blatt (L_{a,N}), befindlich am Umfang des Sockels, in Bezug auf das Ende des Sockels in der ersten Ebene versetzt ist.

21. Einstückiges Teil nach einem der Ansprüche 1 bis 20, **dadurch gekennzeichnet, dass** es eine zumindest teilweise entlang der zweiten Richtung gefaltete Konfiguration aufweist, welche eine V-Form bilden kann.

22. Einstückiges Teil nach einem der Ansprüche 1 bis 21, **dadurch gekennzeichnet, dass** mindestens ein magnetokalorisches Material ausgewählt ist aus: Gadolinium, einer Legierung der MnFe-Familie, einer Legierung von MnFeSn und einer Legierung der GdTb-Familie.

23. Einstückiges Teil nach einem der Ansprüche 1 bis 21, **dadurch gekennzeichnet, dass** mindestens ein magnetokalorisches Material ein Verbundmaterial ist, welches mindestens ein Pulver eines ersten magnetokalorischen Materials und ein organisches Bindemittel beinhaltet.

24. Einstückiges Teil nach Anspruch 23, **dadurch gekennzeichnet, dass** das Bindemittel aus Polypropylen, oder aus Polycarbonat oder aus Polyethylen besteht.

25. Komplexes Teil, welches mindestens zwei einstückige Teile nach einem der Ansprüche 1 bis 24 beinhaltet, wobei die beiden Teile (P₁, P₂) seitenverkehrt zueinander eingebaut sind, wodurch es ermöglicht wird, den freien Raum zwischen Blättern zu reduzieren.

26. Komplexes Teil, welches mindestens zwei einstückige Teile nach Anspruch 25 beinhaltet, **dadurch gekennzeichnet, dass**:
- ein erstes Teil eine Anordnung der Blätter beinhaltet, welche mindestens ein Blatt mit einer dritten Abmessung beinhaltet, welche größer ist als diejenige der anderen Blätter;
- ein zweites Teil einen Sockel beinhaltet, welcher ebenso viele vertiefte Flächen mit größerer Tiefe wie Blätter mit einer dritten Abmessung beinhaltet, welche größer als diejenige der anderen Blätter ist,
- wobei das mindestens eine Blatt dritter Abmessung, größer als das erste Teil, zu einer der über eine größere Tiefe vertieften Flächen des zweiten Teils komplementäre Form besitzt.

27. Thermikmodul, welches mindestens ein magnetokalorisches Element enthält, welches Öffnungen beinhaltet, welche dazu bestimmt sind, durch ein Wärmeübertragungsfluid durchquert zu werden, **dadurch gekennzeichnet, dass** das magnetokalorische Element mindestens ein einstückiges Teil oder ein komplexes Teil nach einem der Ansprüche 1 bis 26 beinhaltet.

28. Thermikmodul nach Anspruch 27, **dadurch gekennzeichnet, dass** es eine ringförmige Anordnung beinhaltet, welche mit Fächern ausgerüstet ist, wobei die Fächer einstückige Teile beinhalten und geartet sind, Kanäle zu beinhalten, welche für den Durchfluss eines Wärmeübertragungsfluids bestimmt sind.

29. Thermikmodul nach einem der Ansprüche 27 oder 28, **dadurch gekennzeichnet, dass** es eine Flachscheibenstruktur beinhaltet, welche radial verteilte Arme aufweist, wobei die Arme die Fächer und V-förmige Enden beinhalten, welche Ein-/Ausgänge für das Wärmeübertragungsfluid beinhalten können.

30. Wärmegenerator, welcher mindestens ein Thermikmodul nach einem der Ansprüche 27 bis 29 beinhaltet, welches durch ein Wärmeübertragungsfluid durchquert wird, welches in alternierender Bewegung beiderseits des magnetokalorischen Elementes angetrieben wird, wobei der Generator eine magnetische Anordnung beinhaltet, welche in Bewegung versetzt wird, um das magnetokalorische Element abwechselnd einer Variation des magnetischen Feldes zu unterwerfen und um in dem magnetokalorischen Element abwechselnd einen Erwärmungs- und einen Kühlzyklus zu erzeugen.

## Claims

1. A part comprising a magnetocaloric material not comprising an alloy comprising iron and silicon and a lanthanide, **characterized in that**:
- said part is a one-piece part and comprises a base (E) situated in a first plane defined by a first direction (Dx) and by a second direction (Dy) and a set of N unitary blades (L_{a,i}) integral with said base (E);
- said blades having a first dimension (D_{Lai,x}) in the first direction (Dx), a second dimension (D_{Lai,y}) in the second direction (Dy) and a third dimension (D_{Lai,z}) in a third direction (Dz) perpendicular to the first and second dimensions;
- an ith blade being separated from an (i+1)th blade by an ith distance (dᵢ);
- the ratio between the second dimension (D_{Lai,y}) and the first dimension (D_{Lai,x}) being greater than or equal to 10;
- the ratio between the third dimension (D_{Lai,z}) and the first dimension (D_{Lai,x}) being greater than or equal to 6;
- the first dimension being of the same order of magnitude as said distance (dᵢ) separating an ith blade (L_{a,i}) from an (i+1)th blade (L_{a,i+1}).

2. The one-piece part as claimed in claim 1, **characterized in that** the first dimension lies between approximately 0.1 mm and 0.8 mm (0.1 mm ≤ D_{Lai,x} ≤ 0.8 mm).

3. The one-piece part as claimed in one of claims 1 and 2, **characterized in that** the second dimension lies between approximately 10 mm and 100 mm (10 mm ≤ D_{Lai,y} ≤ 100 mm).

4. The one-piece part as claimed in one of claims 1 to 3, **characterized in that** the third dimension lies between approximately 6 mm and 25 mm (6 mm ≤ D_{Lai,z} ≤ 25 mm) and can possibly be of the order of 12 mm.

5. The one-piece part as claimed in one of claims 1 to 4, **characterized in that** the distance (di) between an ith blade and an (i+1)th blade lies between approximately 0.1 mm and 1 mm (0.1 ≤ dᵢ ≤ 1 mm).

6. The one-piece part as claimed in one of claims 1 to 5, **characterized in that** the blades comprise convex upper surfaces (S_{La,i}).

7. The one-piece part as claimed in one of claims 1 to 6, **characterized in that** said base comprises hollowed-out surfaces (S_{Ci}) between an ith blade and an (i+1)th blade.

8. The one-piece part as claimed in claim 7, **characterized in that** said base comprises concave surfaces between an ith blade and an (i+1)th blade.

9. The one-piece part as claimed in one of claims 1 to 8, **characterized in that** the set of blades comprises at least one blade of third dimension different from that of the other blades making it possible to constitute a marking and/or positioning element of said one-piece part.

10. The one-piece part as claimed in one of claims 1 to 9, **characterized in that** said base comprises at least one surface between an ith blade and an (i+1)th blade, hollowed out differently from the other hollowed-out surfaces, making it possible to constitute a marking and/or positioning element of said one-piece part.

11. The one-piece part as claimed in one of claims 1 to 10, **characterized in that** at least one subset of blades has at least one protuberance extending along the second direction Dy, said protuberance being situated between the base and the end of the blade opposite said base, so as to gauge the space between two adjacent blades.

12. The one-piece part as claimed in one of claims 1 to 11, **characterized in that**:
- the ratio between the dimension along the third direction of the base (D_{E,z}) and the dimension in the second direction of the base (D_{E,y}) lies between approximately 1/5 and 1/30;
- the ratio between the dimension along the third direction of the base (D_{E,z}) and the third dimension (D_{Lai,z}) is of the order of 1/20;
- the first dimension (D_{Lai,x}) being preferentially substantially equal to the dimension along the third direction of the base (D_{E,z}).

13. The one-piece part as claimed in one of claims 1 to 12, **characterized in that**, the base being made of a base material, the blades are made of at least one magnetocaloric material, the base material and the magnetocaloric material being different.

14. The one-piece part as claimed in one of claims 1 to 13, **characterized in that** it comprises at least two series of blades made of at least two different magnetocaloric materials.

15. The one-piece part as claimed in one of claims 1 to 14, **characterized in that** at least one subset of blades comprises regions distributed along the second direction (Dy) made of different magnetocaloric materials.

16. The one-piece part as claimed in one of claims 1 to 15, **characterized in that** at least one subset of blades comprises regions distributed along the third direction (Dz) made of different magnetocaloric materials.

17. The one-piece part as claimed in one of claims 1 to 16, **characterized in that** it comprises blades having integrated channels (CLi_{a,i}) opening or not at the base level.

18. The one-piece part as claimed in one of claims 1 to 17, **characterized in that** the base comprises at least one channel (C_{E x,y}) in said first plane, dedicated to the passage of a fluid.

19. The one-piece part as claimed in one of claims 1 to 18, **characterized in that** the base comprises peripheral parts (Eₚ₁, Eₚ₂).

20. The one-piece part as claimed in one of claims 1 to 19, **characterized in that** at least the 1st blade (L_{a,1}) or the Nth blade (L_{a,N}), situated at the periphery of the base, is offset relative to the end of said base, in said first plane.

21. The one-piece part as claimed in one of claims 1 to 20, **characterized in that** it has a configuration at least partially folded along said second direction, that can be V-shaped.

22. The one-piece part as claimed in one of claims 1 to 21, **characterized in that** at least one magnetocaloric material is chosen from: gadolinium, an alloy from the MnFe family, an alloy of MnFeSn and an alloy from the GdTb family.

23. The one-piece part as claimed in one of claims 1 to 21, **characterized in that** at least one magnetocaloric material is a composite material comprising at least one powder of a first magnetocaloric material and an organic binder.

24. The one-piece part as claimed in claim 23, **characterized in that** the binder is made of polypropylene, or of polycarbonate or of polyethylene.

25. A complex part comprising two one-piece parts as claimed in one of claims 1 to 24, said two parts (P₁, P₂) being embedded head-to-tail, making it possible to reduce the free space between blades.

26. The complex part comprising two one-piece parts as claimed in claim 25, **characterized in that**:
- a first part comprises a set of the blades comprising at least one blade of third dimension greater than that of the other blades;
- a second part comprises a base comprising as many surfaces hollowed out to greater depths as there are blades of third dimension greater than that of the other blades,
- said at least one blade of third dimension greater than the first part being of a form complementing one of the surfaces hollowed out to a greater depth of the second part.

27. A thermal module containing at least one magnetocaloric element comprising openings intended to be passed through by a heat-transfer fluid, **characterized in that** said magnetocaloric element comprises at least one one-piece part or one complex part as claimed in one of claims 1 to 26.

28. The thermal module as claimed in claim 27, **characterized in that** it comprises an annular arrangement equipped with housings, said housings comprising one-piece parts and being able to include channels intended for the passage of a heat-transfer fluid.

29. The thermal module as claimed in one of claims 27 or 28, **characterized in that** it comprises a flat disk structure having branches distributed radially, said branches comprising said housings and V-shaped ends that can include heat-transfer fluid inlets/outlets.

30. A thermal generator comprising at least one thermal module as claimed in one of claims 27 to 29, passed through by a heat-transfer fluid driven in alternate displacement on either side of said magnetocaloric element, said generator comprising a magnetic arrangement set in motion to alternately subject said magnetocaloric element to a magnetic field variation and alternately create, in said magnetocaloric element, a heating and cooling cycle.
